# EUROPÄISCHE PATENTSCHRIFT

(11) **EP 0 494 348 B1**
(45) Veröffentlichungstag und Bekanntmachung des Hinweises auf die Patenterteilung: **20.04.1994**
(21) Anmeldenummer: 91118306.9
(22) Anmeldetag: 28.10.1991
(51) Int. Cl.: F04D 29/10, F16J 15/16

(54) **Vorrichtung zum Ableiten von Flüssigkeitsbestandteilen**
Device for the draining-off of fluid
Dispositif pour l'évacuation de liquide

(30) Priorität: 09.01.1991 DE 4100426
(43) Veröffentlichungstag der Anmeldung: 15.07.1992
(73) Patentinhaber: Firma Carl Freudenberg, 69469 Weinheim (DE)
(72) Erfinder: Cordts, Detlef, Dr., W-6942 Mörlenbach (DE); Wagner, Frank, W-6948 Wald-Michelbach (DE)

(56) Entgegenhaltungen:
- DE-A- 3 931 938
- DE-B- 2 846 950
- FR-A- 2 151 398
- GB-A- 2 109 875

## Beschreibung

Die Erfindung betrifft eine Vorrichtung zum Ableiten von aus einem Dichtspalt austretenden Flüssigkeitsbestandteilen in einen Hohlraum, der eine umlaufende Welle umschließt, wobei dem Hohlraum und/oder diesen begrenzenden Maschinenelementen eine Wärmequelle zur Verdampfung der Flüssigkeitsbestandteile zugeordnet ist.

Eine solche Vorrichtung ist aus der DE 28 46 950 B1 bekannt. Die Vorrichtung ist in einer Kühlmittelpumpe für flüssigkeitsgekühlte Brennkraftmaschinen enthalten, wobei ein Kanal aus einem Ringraum zwischen einem Dichtring und einem Lager zu einer Verdunstungskammer erweitert ist und ins Freie führt. Das durch die Dichtung hindurchsickernde Kühlmittel wird zunächst in der Verdunstungskammer gesammelt und anschließend verdunstet, wobei der Kühlmitteldunst in die Umgebung abgegeben wird.

Eine weiter Vorrichtung, die ebenfalls einen Bestandteil einer Pumpeneinheit für Flüssigkeitspumpen bildet, ist aus der DE-PS 38 21 352 bekannt. Danach ist vorgesehen, aus einem Dichtspalt austretende Flüssigkeitsbestandteile über eine Entlüftungseinrichtung eines Ringraumes abzuleiten und so von den angrenzenden Bauteilen fernzuhalten.

Dabei ist aber zu beachten, daß während der Warmlaufphase der angrenzenden Maschine oder bei kurzen Laufzeiten, wie beispielsweise im Kurzstreckenbetrieb von Kraftfahrzeugen, nur vergleichsweise geringe Temperaturen zum Beispiel im Hohlraum eines Pumpengehäuses auftreten, so daß verbleibende Leckflüssigkeit nicht entfernt wird. Die dadurch entstehende, relativ hohe Luftfeuchte führt zu Korrossion der benachbarten Bauteile, damit verbundener Einschränkung der Funktionssicherheit und somit einer Beeinträchtigung der Gebrauchsdauer.

Der Erfindung liegt die Aufgabe zugrunde, eine Vorrichtung der eingangs genannten Art derart weiterzuentwickeln, daß sämtliche aus einem Dichtspalt austretenden Flüssigkeitsbestandteile aus dem Hohlraum entfernt werden und so eine erhöhte Funktionssicherheit der Maschine bei verlängerter Gebrauchsdauer erzielt werden kann.

Diese Aufgabe wird erfindungsgemäß bei einer Vorrichtung der eingangs genannten Art mit den kennzeichnenden Merkmalen von Anspruch 1 gelöst. Auf vorteilhafte Ausgestaltungen nehmen die Unteransprüche Bezug.

Zur Lösung der Aufgabe ist es vorgesehen, daß die Wärmequelle aus einer ersten und einer zweiten Reibscheibe besteht und daß die erste und die zweite Reibscheibe durch zumindest ein Hilfsmittel aneinander anlegbar sind.

Vermehrte Undichtigkeiten von Gleitringdichtungen treten überwiegend bei relativ geringen Temperaturen der anschließenden Maschinenelemente auf, so daß eine Verdampfung der ausgetretenen Flüssigkeitsbestandteile aus dem Gehäuse heraus ohne zusätzliche Wärmequelle erschwert wird. Eine Erhöhung der Verdampfungsleistung insbesondere bei ungünstigen Betriebsbedingungen der Maschine, beispielsweise bei extrem kurzer Gebrauchsdauer, bei der die Maschine nicht die optimale Betriebstemperatur erreicht, ist nur über eine externe Wärmequelle möglich.

Im wesentlichen bestehen zwei Schaltungsmöglichkeiten, um eine Heizleistung zu erzeugen. Entweder wird der Hohlraum, in den die Flüssigkeit einfließt, permanent gleichmäßig beheizt und so auf einer, für die Verdampfung vorteilhaften Temperatur gehalten oder die Wärmequelle wird nur bei einer bestimmten Menge Flüssigkeit im Hohlraum zugeschaltet. Wird die Temperatur zum Beispiel durch Reibung auf einem konstanten Wert gehalten, hat das den Vorteil, daß auch kleinste Flüssigkeitsverluste, die durch die Dichtung austreten, kontinuierlich verdampft werden. Setzt die Beheizung des Hohlraumes erst ein, wenn eine bestimmte Flüssigkeitsmenge ausgetreten ist und sich im Hohlraum befindet, verkleinert sich der mittlere Leistungsbedarf zur Erzeugung der Wärme.

Wird die Heizleistung P durch Reibung erzeugt, haben der Reibwert µ, die Anpreßkraft F_{N}, der Reibradius der Reibpartner r_{R} und die Winkelgeschwindigkeit ω Einfluß auf die gewünschte Temperatur. Der formelmäßige Zusammenhang wird durch die Gleichung P = µ * F_{N} * r_{R} * ω beschrieben. Bei sinnvoller Festlegung der Parameter ist eine Verdampfung von ca. 1 g Flüssigkeit pro Minute möglich.

Gemäß einer vorteilhaften Ausgestaltung ist es vorgesehen, daß die Wärmequelle aus einer ersten und einer zweiten Reibscheibe besteht und daß die erste und die zweite Reibscheibe durch zumindest ein Hilfsmittel aneinander anlegbar sind. Durch das Hilfsmittel, das eine der Reibscheiben in axialer Richtung gegen die andere Reibscheibe drückt, entsteht, im wesentlichen in Abhängigkeit von der Anpreßkraft, eine Wärmemenge, die zur Verdampfung der in diesem Raum befindlichen Flüssigkeit führt.

Der zweiten Reibscheibe kann ein Federelement zur spielfreien Berührung mit dem Hilfsmittel zugeordnet sein. Diese Zuordnung gewährleistet eine genaue Justierung der Anpreßkraft zwischen den beiden Reibscheiben, so daß sich bei Betätigung der Vorrichtung eine exakt definierte Wärmemenge ergibt. Außerdem sind zufällig im Eingriff befindliche Reibpartner ausgeschlossen. Dabei kann das Federelement separat im Hohlraum, ohne feste Verbindung zur zweiten Reibscheibe angeordnet oder einstückig mit dieser ausgeführt sein. Ist das Federelement in die zweite Reibscheibe integriert, ist hierbei von Vorteil, daß sich die Montage der Vorrichtung vereinfacht, weil das Federelement stets eine festgelegte Position zur Reibscheibe einnimmt. Allerdings ist selbstverständlich darauf zu achten, daß es sich um ein Federelement handelt, das eine problemlose Montage und eine einwandfreie Funktion der Vorrichtung gewährleistet.

Beispielsweise ist das Federelement durch zumindest eine Tellerfeder gebildet. Tellerfedern bauen in axialer Richtung sehr kompakt, wodurch sich, bei ausgezeichneter Funktion, insgesamt geringe Abmessungen der Vorrichtung in axialer Richtung ergeben. Als Alternative wäre beispielsweise als Federelement auch ein Schaumstoffkörper aus elastomerem Werkstoff denkbar.

In einem vorteilhaften Ausführungsbeispiel ist es vorgesehen, daß die erste Reibscheibe fest auf der Welle angeordnet und daß die zweite Reibscheibe in axialer Richtung beweglich und unverdrehbar mit einem den Hohlraum begrenzenden Maschinenelement, das als Gehäuse ausgebildet sein kann, verbunden ist. Eine Montage der Vorrichtung in eine Maschine ist dadurch besonders einfach möglich.

Die Reibscheiben können ein L-förmiges Profil aufweisen, wodurch die Vorrichtung einfach montiert werden kann und in axialer Richtung eine geringe Ausdehnung aufweist. Außerdem weisen die Reibscheiben zur Verdampfung der Flüssigkeitsbestandteile Öffnungen auf, die mit netzförmigen Einsätzen versehen sein können, um während des Betriebes den Quellkörper vor Verschleiß zu schützen. Durch die netzförmigen Einsätze wird vermieden, daß der Quellkörper bei bestimmungsgemäßer Ausdehnung in axialer Richtung durch die Öffnungen der relativ unbeweglichen Reibscheibe dringt und von der rotierenden Reibscheibe beschädigt wird.

Das Hilfsmittel kann beispielsweise aus einem elastischen Quellkörper bestehen. Dieser Quellkörper, der so beschaffen sein kann, daß er nur in axialer Richtung dehnbar ist, stützt sich einerseits an einem Widerlager und andererseits an der durch das Federelement vorgespannten Reibscheibe ab. Die Flüssigkeit, die während des Betriebes aus einem Dichtspalt austritt, bewirkt eine Ausdehnung des Quellkörpers in axialer Richtung. Je nach Flüssigkeitsmenge und der damit verbundenen Ausdehnung des Quellkörpers in axialer Richtung vergrößert sich der Anpreßdruck der zweiten an die erste Reibscheibe, so daß in dem Hohlraum zusätzliche Wärme entsteht. Die durch die Wärme verdampfte Flüssigkeit wird dann beispielsweise über Entlüftungsbohrungen im Gehäuse nach außen abgeführt.

Die Reibscheiben können auch durch ein Wachs-Dehnelement, das sich an einem Widerlager abstützt, aneinandergepreßt werden. Wird das Wachs-Dehnelement extern von außen beheizt oder gekühlt und dadurch in seiner Ausdehnung beeinflußt, erzeugt es eine Temperatur im Hohlraum unabhängig von der zu verdampfenden Flüssigkeitsmenge. Bei Erzeugung einer konstanten Temperatur, beispielsweise der Verdampfungstemperatur des zu verdampfenden Mediums, verdampfen in den Hohlraum ausgetretene Flüssigkeitsbestandteile sehr schnell. Des weiteren ist eine Ausführung denkbar, bei der die Reibscheiben, solang die Temperatur im Hohlraum unterhalb der Verdampfungstemperatur der austretenden Flüssigkeit liegt, federkraftbeaufschlagt aneinandergepreßt werden. Bei Erreichen einer dem jeweiligen Anwendungsfall angepaßten Temperatur werden die beiden Reibscheiben durch ein Wachs-Dehnelement voneinander getrennt. Diese Temperatur liegt oftmals und vorteilhafterweise oberhalb der Verdampfungstemperatur der austretenden Flüssigkeit, so daß in jedem Fall die Verdampfungstemperatur im Hohlraum gehalten wird und kleinste Flüssigkeitsmengen rasch verdampfen.

Das Widerlager kann als Gleitringdichtung ausgebildet und im Gehäuse festgelegt sein. Eine einfache Herstellbarkeit des Gehäuses zum Einbau der erfindungsgemäßen Vorrichtung ist dadurch gegeben, schwierig herstellbare Absätze oder Vorsprünge können vermieden werden. Außerdem befindet sich die Vorrichtung dann unmittelbar in der Nähe des Flüssigkeitsaustritts.

Die verdampfte Flüssigkeit entweicht durch Entlüftungsöffnungen, die im Gehäuse angeordnet sind.

Der Gegenstand der Erfindung wird nachfolgend anhand der als Anlage beigefügten Zeichnung eines Ausführungsbeispiels weiter verdeutlicht.

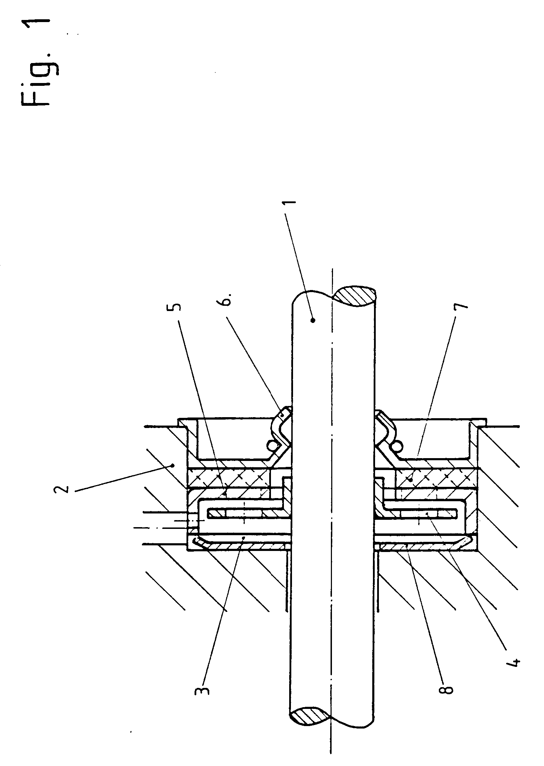

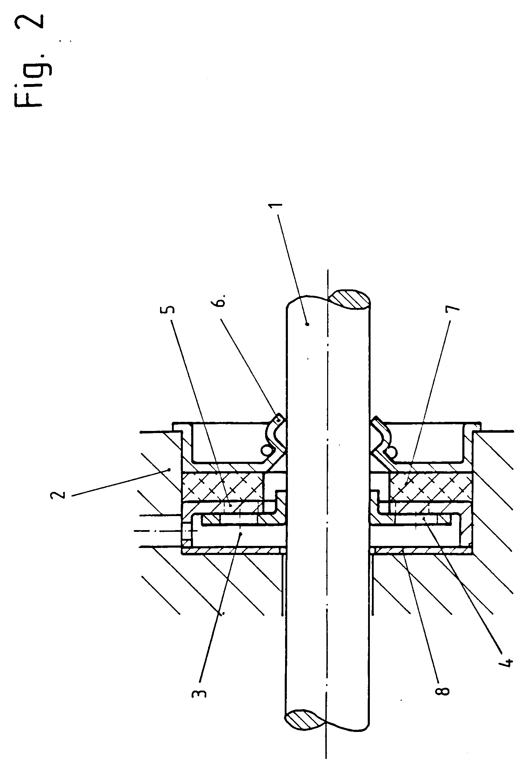

In den Figuren 1 und 2 ist eine Vorrichtung dargestellt, die im wesentlichen einen Hohlraum 3 umfaßt, der eine Welle 1 umschließt, auf der eine erste Reibscheibe 4 unverrückbar befestigt ist. Dichtet die Gleitringdichtung 6 die Welle 1 gegen den Hohlraum 3 gut ab, so daß keine Flüssigkeit in den Hohlraum 3 eintritt, nehmen der in axialer Richtung zur Gleitringdichtung 6 benachbarte Quellkörper 7 und die, durch die Tellerfeder 8 an den Quellkörper 7 festgelegte, zweite Reibscheibe 5 die in Figur 1 dargestellte Position ein. Sowohl das Gehäuse 2 und die Gleitringdichtung 6 als auch der Quellkörper 7, die zweite Reibscheibe 5 und die Tellerfeder 8 verdrehen sich relativ zueinander nicht. Die Gleitringdichtung 6 bildet, fest im Gehäuse 2 angeordnet, das Widerlager für den in axialer Richtung dehnbaren Quellkörper 7. Die Tellerfeder 8 legt, zur sicheren Trennung der beiden Reibscheiben 4, 5, die zweite Reibscheibe 5 unter Vorspannung an den Quellkörper 7 an.

In Figur 2 tritt Flüssigkeit beispielsweise durch den Dichtspalt zwischen der Welle 1 und der Gleitringdichtung 6 aus. Dabei dehnt sich der Quellkörper 7 in axialer Richtung aus und bewegt, die Gleitringdichtung 6 als Widerlager nutzend, die zweite Reibscheibe 5 gegen den Widerstand der weichen Tellerfeder 8 gegen die erste, fest auf der Welle 1 fixierten Reibscheibe 4. Je nach Beschaffenheit der Oberfläche, der Größe der Anpreßkraft, dem Reibradius der Reibpartner und der Höhe der Drehzahl von Gehäuse 2 und/oder Welle 1 erzeugt die Reibung zwischen den beiden Reibscheiben 4, 5 Wärme, die die ausgetretene Flüssigkeit verdampft. Die verdampfte Flüssigkeit kann über Entlüftungsbohrungen im Gehäuse entweichen.

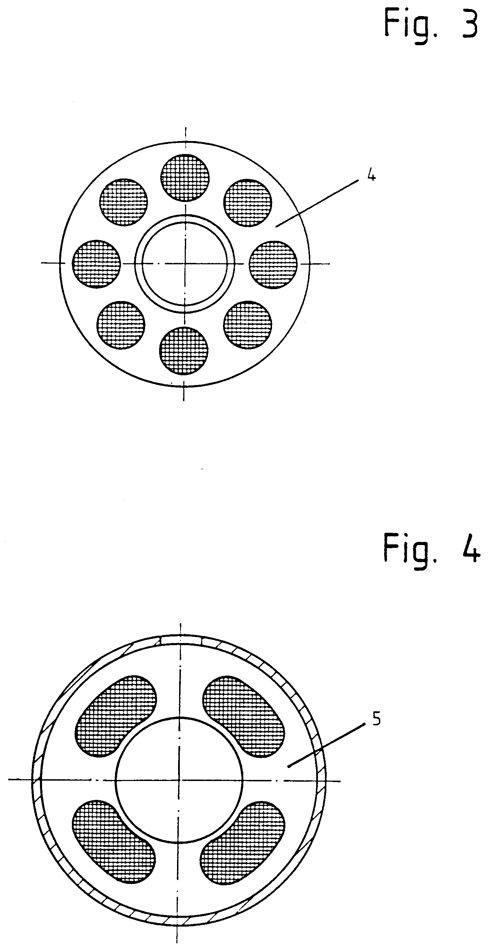

In den Figuren 3 und 4 sind die Reibscheiben 4, 5 dargestellt, die zur Verdampfung der Flüssigkeitsbestandteile Öffnungen aufweisen, die mit netzförmigen Einsätzen versehen sind. Dadurch wird vermieden, daß der Quellkörper bei bestimmungsgemäßer Ausdehnung in axialer Richtung durch die Öffnungen der L-förmigen Reibscheiben dringt und dort von der relativ beweglichen Reibscheibe 4 beschädigt wird.

## Patentansprüche

1. Vorrichtung zum Ableiten von aus einem Dichtspalt austretenden Flüssigkeitsbestandteilen in einen Hohlraum, der eine umlaufende Welle (1) umschließt, wobei dem Hohlraum (3) und/oder diesen begrenzenden Maschinenelementen eine Wärmequelle zur Verdampfung der Flüssigkeitsbestandteile zugeordnet ist, dadurch gekennzeichnet, daß die Wärmequelle aus einer ersten (4) und einer zweiten Reibscheibe (5) besteht und daß die erste (4) und die zweite Reibscheibe (5) durch zumindest ein Hilfsmittel aneinander anlegbar sind.

2. Vorrichtung nach Anspruch 1, dadurch gekennzeichnet, daß der zweiten Reibscheibe (5) ein Federelement zur spielfreien Berührung mit dem Hilfsmittel zugeordnet ist.

3. Vorrichtung nach Anspruch 2, dadurch gekennzeichnet, daß das Federelement durch zumindest eine Tellerfeder (8) gebildet ist.

4. Vorrichtung nach Anspruch 1, dadurch gekennzeichnet, daß die erste Reibscheibe (4) fest auf der Welle (1) angeordnet und daß die zweite Reibscheibe (5) in axialer Richtung beweglich und unverdrehbar mit dem den Hohlraum (3) begrenzenden Maschinenelement, das als Gehäuse (2) ausgebildet ist, verbunden ist.

5. Vorrichtung nach Ansprüchen 1 bis 4, dadurch gekennzeichnet, daß die Reibscheiben (4, 5) ein L-förmiges Profil aufweisen.

6. Vorrichtung nach Anspruch 1, dadurch gekennzeichnet, daß das Hilfsmittel aus einem elastischen Quellkörper (7) besteht.

7. Vorrichtung nach Anspruch 6, dadurch gekennzeichnet, daß der Quellkörper (7) zwischen einem Widerlager und der zweiten Reibscheibe (5) angeordnet ist.

8. Vorrichtung nach Anspruch 1, dadurch gekennzeichnet, daß das Hilfsmittel aus einem Wachs-Dehnelement besteht und zwischen einem Widerlager und der zweiten Reibscheibe (5) angeordnet ist.

9. Vorrichtung nach einem der Ansprüche 7 oder 8, dadurch gekennzeichnet, daß das Widerlager als Gleitringdichtung (6) ausgebildet und im Gehäuse (2) festgelegt ist.

10. Vorrichtung nach einem der Ansprüche 1 bis 9, dadurch gekennzeichnet, daß das Gehäuse (2) mit Entlüftungsöffnungen versehen ist.

## Claims

1. A device for the draining off of fluid components, escaping from a sealing gap, into a cavity which surrounds a rotating shaft (1), the cavity (3) and/or machine elements bounding the latter being assigned a heat source for the evaporation of the fluid components, characterized in that the heat source comprises a first (4) and a second friction disc (5) and in that the first (4) and the second friction disc (5) can be brought to bear on one another by means of at least one auxiliary means.

2. A device as claimed in claim 1, characterized in that the second friction disc (5) is assigned a spring element intended to ensure play-free contact with the auxiliary means.

3. A device as claimed in claim 2, characterized in that the spring element is formed by at least one cup spring (8).

4. A device as claimed in claim 1, characterized in that the first friction disc (4) is arranged fixedly on the shaft (1) and in that the second friction disc (5) is connected in axially movable and non-rotatable fashion to the machine element bounding the cavity (3), which machine element is designed as a housing (2).

5. A device according to any of claims 1 to 4, characterized in that the friction discs (4, 5) have an L-shaped profile.

6. A device according to claim 1, characterized in that the auxiliary means comprises a resilient swelling body (7).

7. A device according to claim 6, characterized in that the swelling body (7) is arranged between an abutment and the second friction disc (5).

8. A device according to claim 1, characterized in that the auxiliary means comprises a wax expanding element and is arranged between an abutment and the second friction disc (5).

9. A device according to either of claims 7 and 8, characterized in that the abutment is designed as a rotating mechanical seal (6) and is fixed in the housing (2).

10. A device according to any of claims 1 to 9, characterized in that the housing (2) is provided with vent openings.

## Revendications

1. Dispositif pour évacuer des composants de liquide sortant d'un intervalle d'étanchéité dans une cavité, qui entoure un arbre tournant (1), cette cavité (3) et/ou des éléments de machine la délimitant étant associés à une source de chaleur pour la vaporisation des composants de liquide, caractérisé en ce que la source de chaleur se compose d'un premier (4) et d'un second disque de friction (5) et en ce que le premier (4) et le second disque de friction (5) peuvent être appliqués l'un contre l'autre par au moins un moyen auxiliaire.

2. Dispositif selon la revendication 1, caractérisé en ce que le second disque de friction (5) est associé à un élément élastique pour un contact sans jeu avec le moyen auxiliaire.

3. Dispositif selon la revendication 2, caractérisé en ce que l'élément élastique est constitué par au moins un ressort annulaire (8).

4. Dispositif selon la revendication 1, caractérisé en ce que le disque de friction (4) est fixé sur l'arbre (1) et en ce que le second disque de friction (5) est relié, avec possibilité de déplacement dans une direction axiale et de façon non tournante, à l'élément de machine délimitant la cavité (3) et est agencé comme un carter (2).

5. Dispositif selon les revendications 1 à 4; caractérisé en ce que les disques de friction (4, 5) ont un profil en forme de L.

6. Dispositif selon la revendication 1, caractérisé en ce que le moyen auxiliaire se compose d'un corps dilatable élastique.

7. Dispositif selon la revendication 6, caractérisé en ce que le corps dilatable (7) est disposé entre un contre-appui et le second disque de friction.

8. Dispositif selon la revendication 1, caractérisé en ce que le moyen auxiliaire se compose d'un élément dilatable en cire et est disposé entre un contre-appui et le second disque de friction (5).

9. Dispositif selon l'une des revendications 7 ou 8, caractérisé en ce que le contre-appui est agencé comme un joint d'étanchéité (6) à bague glissante et est fixé dans le carter (2).

10. Dispositif selon une des revendications 1 à 9, caractérisé en ce que le carter (2) est pourvu d'orifices d'aération.
